(19) **Europäisches Patentamt / European Patent Office / Office européen des brevets**

(11) **EP 4 726 605 A1**

(12) **EUROPEAN PATENT APPLICATION**

(43) Date of publication:
15.04.2026 Bulletin 2026/16

(51) International Patent Classification (IPC):
$G06N\ 3/045$ (2023.01)  $G06N\ 3/063$ (2023.01)

(21) Application number: 24215790.7

(22) Date of filing: 27.11.2024

(52) Cooperative Patent Classification (CPC):
G06N 3/063; G06N 3/045

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 11.10.2024 CN 202411419951

(71) Applicant: Alipay (Hangzhou) Information Technology Co., Ltd.
Hangzhou, Zhejiang 310000 (CN)

(72) Inventors:
• ZHAO, Junping
Hangzhou, Zhejiang Province, 310000 (CN)
• WANG, Ziqing
Hangzhou, Zhejiang Province, 310000 (CN)
• WU, Hao
Hangzhou, Zhejiang Province, 310000 (CN)

(74) Representative: Winter, Brandl - Partnerschaft mbB
Alois-Steinecker-Straße 22
85354 Freising (DE)

(54) **INFERENCE COMPUTATION METHODS AND APPARATUSES FOR LARGE MODELS**

(57) Embodiments of this specification provide inference computation methods and apparatuses for large models. In a method, a large model includes N computation layers. When performing inference computation, a graphics processing unit (GPU) requests first video memory space for partial computation layers of the N computation layers, performs inference computation on the partial computation layers, and stores obtained inference result data in the first video memory space. Then the inference result data are dumped from the first video memory space to CPU memory, where the released video memory space can be provided for other computation layers to perform inference computation. When the inference result data are needed, the inference result data in the CPU memory are transmitted to CPU video memory. When data processed by the large model include privacy data, privacy protection needs to be implemented for the data during the processing.

FIG. 3

EP 4 726 605 A1

**Description**

**TECHNICAL FIELD**

One or more embodiments of this specification relate to the field of computer technologies, and in particular, to inference computation methods and apparatuses for large models.

**BACKGROUND**

A large language model (LLM), large model for short, is a type of deep learning model trained based on massive text data. The large model is particularly powerful in the field of natural language processing (NLP). The large model usually has a plurality of computation layers and a large quantity (possibly several billions or even tens of billions) of parameters, and can understand and generate a natural language text. A trained large model can not only generate a natural language text through inference, but also deeply understand the meaning of the text and process various natural language tasks, such as text summarization, classification, question answering, translation, and document summarization, with strong generalization capabilities.

There are many indicators for evaluating inference performance of the large model. One of the indicators is a first-word latency. The time consumed from inputting a prompt template (Prompt) into the large model by a user to outputting a first word (token) and returning the first word to the user by the large model is known as the first-word latency. The lower the first-word latency, the better user experience. During processing of the large model, there is also a need to protect privacy data of the user. In addition, to improve inference performance, the large model usually uses a combination of a graphics processing unit (GPU) and a CPU to perform inference operations. Currently, as the user inputs more prompt template content into the large model, the inference time of the large model becomes longer, and the first-word latency increases.

Therefore, an improved solution that can reduce the first-word latency in the inference process of the large model is expected.

**SUMMARY**

One or more embodiments of this specification describe inference computation methods and apparatuses for large models to reduce first-word latencies in inference processes of the large models. Specific technical solutions are as follows:

According to a first aspect, some embodiments provide an inference computation method for a large model, where the large model includes N computation layers, and the method includes: requesting first video memory space for partial computation layers of the N computation layers; performing inference computation on the partial computation layers, and storing obtained inference result data in the first video memory space; dumping the inference result data from the first video memory space to CPU memory, where the released video memory space is provided for other computation layers to perform inference computation; and when the inference result data are needed, transmitting the inference result data in the CPU memory to GPU video memory.

In an implementation, an inference computation process of the large model includes a prefill stage and a decode stage; and the step of requesting first video memory space for partial computation layers of the N computation layers is performed at the prefill stage.

In an implementation, the step of requesting first video memory space for partial computation layers of the N computation layers includes: requesting the first video memory space for the partial computation layers of the N computation layers based on to-be-processed data; and the step of performing inference computation on the partial computation layers includes: performing inference computation on the partial computation layers based on the to-be-processed data.

In an implementation, the step of requesting the first video memory space for the partial computation layers of the N computation layers based on to-be-processed data includes: determining a video memory capacity needed when performing computation on the to-be-processed data in the partial computation layers; when the video memory capacity is not greater than available video memory space, allocating the first video memory space in the available video memory space for the needed video memory capacity; and when the video memory capacity is greater than the available video memory space, entering a waiting state.

In an implementation, a quantity of the partial computation layers is a default value; or a quantity of the partial computation layers is determined based on a length of the to-be-processed data and status data of video memory.

In an implementation, the inference result data include key-value pair data generated based on an attention mechanism and the to-be-processed data, and the key-value pair data include key-value pair data obtained through computation from each computation layer.

In an implementation, the step of storing obtained inference result data in the first video memory space includes:

allocating continuous storage addresses for inference result data of a same computation layer; and the step of transmitting the inference result data in the CPU memory to GPU video memory includes: transmitting the inference result data in the CPU memory to the GPU video memory by using a transmission instruction submitted by a CPU to a GPU, where the transmission instruction is used to transmit the inference result data of the same computation layer, and the transmission instruction includes a start storage address and data length of the inference result data of the same computation layer.

In an implementation, the inference result data correspond to a processing request; and the step of allocating continuous storage addresses for inference result data of a same computation layer includes: when there are inference result data corresponding to several processing requests, allocating the continuous storage addresses for the inference result data of the same computation layer in relation to the several processing requests, where the transmission instruction is used to transmit the inference result data of the same computation layer in relation to the several processing requests, and the transmission instruction includes the start storage address and data length of the inference result data of the same computation layer in relation to the several processing requests.

In an implementation, the step of transmitting the inference result data in the CPU memory to GPU video memory includes: when inference result data of a plurality of computation layers in the CPU memory are needed, dividing the inference result data of the plurality of computation layers into to-be-transmitted inference result data of a first part of the computation layers and to-be-recomputed inference result data of a second part of the computation layers; transmitting the inference result data of the first part of the computation layers from the CPU memory to the GPU video memory; and performing inference computation again on the second part of the computation layers in the GPU video memory to obtain inference result data of the second part of the computation layers.

In an implementation, the step of dividing the inference result data of the plurality of computation layers into to-be-transmitted inference result data of a first part of the computation layers and to-be-recomputed inference result data of a second part of the computation layers includes: dividing the inference result data of the plurality of computation layers into the to-be-transmitted inference result data of the first part of the computation layers and the to-be-recomputed inference result data of the second part of the computation layers based on usage status information of a device system.

In an implementation, the step of requesting first video memory space for partial computation layers of the N computation layers includes: when available video memory space is less than a predetermined threshold, requesting the first video memory space for the partial computation layers of the N computation layers.

According to a second aspect, some embodiments provide an inference computation apparatus for a large model, where the large model includes N computation layers, and the apparatus is deployed in a GPU and includes: a video memory requesting module, configured to request first video memory space for partial computation layers of the N computation layers; an inference computation module, configured to perform inference computation on the partial computation layers, and store obtained inference result data in the first video memory space; a data dumping module, configured to dump the inference result data from the first video memory space to CPU memory, where the released video memory space is provided for other computation layers to perform inference computation; and a data access module, configured to transmit the inference result data in the CPU memory to GPU video memory when the inference result data are needed.

According to a third aspect, some embodiments provide a computer-readable storage medium. The computer-readable storage medium stores a computer program. When the computer program is executed on a computer, the computer is enabled to perform the method in any implementation of the first aspect.

According to a fourth aspect, some embodiments provide a computing device, including a memory and a processor. The memory stores executable code. When the processor executes the executable code, the method in any implementation of the first aspect is implemented.

In the method and apparatus provided in the embodiments of this specification, the video memory space is requested for the partial computation layers of the N computation layers included in the large model, and the inference result data obtained by performing inference computation on the partial computation layers are dumped from the GPU video memory to the CPU memory; and when the inference result data are needed, the inference result data in the CPU memory are transmitted to the GPU video memory. Because the video memory space is requested only for the partial computation layers, the video memory space to be requested is significantly reduced, and dumping the inference result data stored in the GPU video memory to the CPU memory can free up more space for the inference computation. When an amount of the to-be-processed data is very large, there is no need to request large video memory space for all the N computation layers. As such, demand for the video memory space is reduced, the queuing time in requesting video memory is reduced, and the time consumed in the inference process is also reduced. Therefore, a first-word latency in the inference process of the large model can be shortened.

## BRIEF DESCRIPTION OF DRAWINGS

To describe the technical solutions in the embodiments of this application more clearly, the following briefly describes the accompanying drawings required for describing the embodiments. Clearly, the accompanying drawings in the following description merely show some embodiments of this application, and a person of ordinary skill in the art can derive other accompanying drawings from these accompanying drawings without creative efforts.

FIG. 1 is a schematic diagram illustrating a principle of serial execution of a prefill stage and a decode stage;

FIG. 2 is a schematic diagram illustrating a relationship between an input sequence and a change in video memory demand;

FIG. 3 is a schematic flowchart illustrating a method for batch data processing in an inference process of a large model, according to some embodiments;

FIG. 4 is a schematic diagram illustrating stream data transmission between a GPU and a CPU at different stages;

FIG. 5 is a schematic diagram of comparison between storing key-value pair data by token and storing key-value pair data by layer;

FIG. 6 is a schematic diagram illustrating an internal logical structure of video memory; and

FIG. 7 is a schematic block diagram illustrating an apparatus for batch data processing in an inference process of a large model, according to some embodiments.

## DESCRIPTION OF EMBODIMENTS

The solutions provided in this application are hereinafter described with reference to the accompanying drawings.

As mentioned above, to improve processing efficiency of a large model, running of the large model (LLM) is usually based on a combination of a GPU and a CPU. The GPU is a hardware device specially used for graphics processing and image computation. The GPU was originally developed to accelerate graphics rendering, and was later developed to perform large-batch computation. The GPU can provide many parallel processing cores. The GPU has very strong parallel processing capabilities, is specialized in performing parallel computing tasks, and can perform most of inference computation of the LLM. The CPU is responsible for managing an operating system, processing input/output requests, and performing tasks related to a user interface. The CPU and the GPU can work together through an interaction process. The CPU performs computation processing based on CPU memory, and the CPU memory is a random access memory (RAM) that interacts directly with the CPU. The GPU performs computation processing based on video memory. The video memory is a video card that interacts directly with the GPU and is a dedicated memory.

A first-word latency is one of indicators for evaluating performance of the large model. LLM inference usually means that a trained large model is deployed in an inference framework to perform an inference process based on an input processing request, and generate and return an appropriate sentence. The first-word latency usually refers to the time needed for the model to generate the first text unit (token) after receiving to-be-processed data. This indicator reflects a response speed of the model and is particularly important for a real-time interactive system.

In an inference process of the large model, a token is a basic unit in a text. This unit can be a character, a word, a term, a phrase, a symbol, or a text segment in any other form. Definitions of tokens may vary in different contexts, but the tokens are usually basic units in text analysis and processing. The tokens are unsigned integers obtained by effectively segmenting or tokenizing a text string and mapping each segment.

It is worthwhile to note that the large model can process a variety of data types including images and texts. Therefore, the to-be-processed data input into the large model can be an image, a text, or a combination of an image and a text, etc. The processing request is a to-be-processed request for requesting the large model to perform inference computation. The processing request can be sent to the large model through a user operation or through program processing. The preceding content is not limited in this specification.

Currently popular large models based on an autoregressive transformer architecture, for example, large models such as Bayling, LLaMA, Qwen, GPT, and GLM, are neural network models based on a self-attention mechanism. The large models in this architecture mainly include two stages of computation during inference, that is, a prefill stage and a decode stage, which are executed serially.

The prefill stage includes the following processing: After a user inputs to-be-processed data into the LLM, the LLM automatically encodes the to-be-processed data, generates attention information for the to-be-processed data, such as generating a KV cache (key-value pair cache data) of a token in the to-be-processed data, caches inference result data in GPU video memory, and generates the first token. The inference result data are used at the decode stage. When the large model includes N computation layers, computation needs to be performed on the N computation layers in sequence at the prefill stage to obtain KV cache data of each token in each computation layer. Therefore, an amount of KV cache data is very large and the demand for video memory is very high. In summary, the prefill stage requires a large video memory capacity and high computing power. The time taken at the prefill stage determines the time taken to return the first token to the user, which is the first-word latency in model inference.

The decode stage refers to a process in which the LLM actually generates a text to be output. At this stage, given context information (that is, attention information) of the prefill stage, model inference continues to be performed, and then computation is performed on the N computation layers again to generate tokens of the subsequent to-be-output text one by one. Each token of the output text needs to be obtained through computation of the N computation layers until the inference is completed. During execution of the decode stage, the KV cache data cached in the video memory at the prefill stage need to be accessed in the inference computation of each computation layer, and attention information (data of keys and values) of the newly generated tokens at the decode stage is concatenated with data of keys and values cached at the prefill stage for inference. At this stage, memory access is intensive, and inference consumes a long time.

In an attention computation process of the large model, to reduce computation operations, the attention information (including keys and values) of the generated tokens is cached to form a block of occupied video memory space, known as a KV cache. The KV cache occupies a large amount of GPU video memory, thereby trading video memory space for computation time.

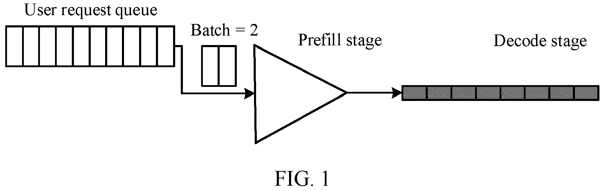

The prefill stage and the decode stage mentioned above are usually executed in series. FIG. 1 is a schematic diagram illustrating a principle of serial execution of the prefill stage and the decode stage. When there is one processing request for parallel processing, that is, batch = 1, to-be-processed data carried by the processing request are first processed at the prefill stage, and then processed at the decode stage. When there are a plurality of processing requests for parallel processing, for example, 2, that is, batch = 2, the two processing requests can be processed in parallel at the prefill stage, and then processed in parallel at the decode stage. The prefill stage and the decode stage occupy the video memory together.

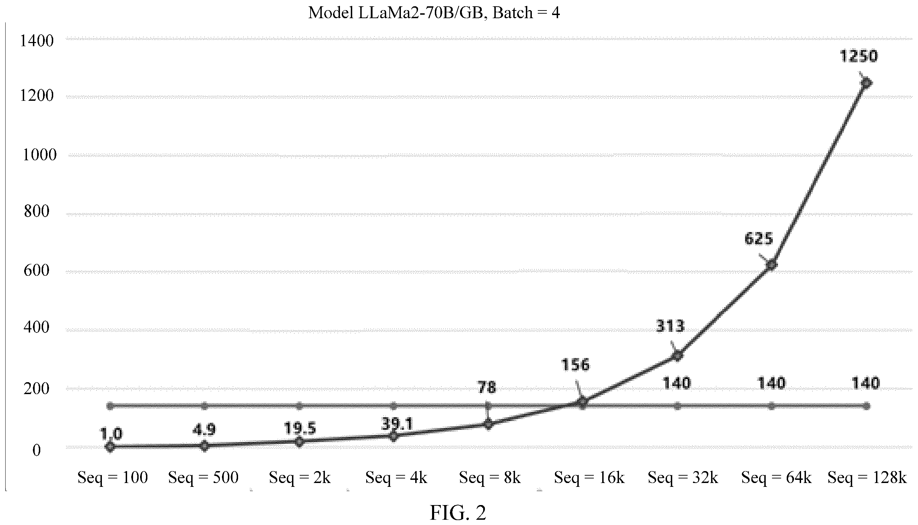

The time consumed at the prefill stage is positively correlated with a size of the LLM and a sequence length of the input to-be-processed data. Because the sequence length input by the user to the large model is variable and tends to gradually become greater, pressure on the video memory at this stage also increases significantly as the amount of the input to-be-processed data increases. FIG. 2 is a schematic diagram illustrating a relationship between an input sequence and a change in video memory demand. A horizontal coordinate represents the amount of to-be-processed data (KB) input to the large model, a vertical coordinate represents the demand for video memory (GB) at the prefill stage, a red line represents the demand for video memory by the KV cache, a blue line represents the demand for video memory by weights in model parameters, and batch = 4 means that a quantity of processing requests for parallel processing is 4. It can be learned that when the amount of the input to-be-processed data gradually increases, the demand for video memory by the KV cache increases significantly, but the demand for video memory by the weights remains basically unchanged.

The time consumed at the decode stage is positively correlated with the size of the LLM and the sequence length of the input to-be-processed data. Because the sequence length of the output text is generally within a controllable range, the demand for video memory at this stage does not change much and does not change significantly with the change of the input sequence length.

The prefill stage is particularly important when the first-word latency and throughput of the large model are considered. Especially when the quantity of processing requests is very large and the sequence length of the to-be-processed data is very long, the video memory becomes insufficient clearly. In this case, the processing requests can only be queued to wait for allocation of KV cache video memory space. The time consumed at the prefill stage increases several times, for example, from 300 msec to 3 sec. The GPU can process a new processing request only when processing of a running processing request is completed (usually taking several seconds) and sufficient video memory is released.

The following describes in detail a method for requesting video memory for processing requests at a prefill stage in a conventional technology. When receiving a processing request, a GPU calculates, based on a sequence length of to-be-processed data carried in the processing request and model information, video memory needed for a KV cache generated by all computation layers at the prefill stage. For example, a calculation formula can be as follows:

$$M = \text{hidden size of a model} \times \text{quantity of model layers} \times 2 \times 2 \times \text{input sequence length} \times \text{batch} \qquad (1)$$

Here, it is assumed that a parameter type is FP16, which occupies two bytes. Therefore, the formula includes a multiplication by 2. There is another multiplication by 2 because the KV obtained through computation occupies two bytes. Video memory needed for a typical model and input sequence length may be up to tens of GB to hundreds of GB, as shown in Table 1.

Table 1

| Model | Quantity of layers | Hidden size | Input sequence length | Batch | KV cache/GB |
|---|---|---|---|---|---|
| GLM-65B | 80 | 8192 | 4096 tokens | 1 | 10 |
| GLM-65B | 80 | 8192 | 4096 tokens | 16 | 160 |
| GLM-65B | 80 | 8192 | 32k | 16 | 1280 |
| OPT-175B | 96 | 12288 | 8192 tokens | 1 | 36 |

(continued)

| Model | Quantity of layers | Hidden size | Input sequence length | Batch | KV cache/GB |
|---|---|---|---|---|---|
| OPT-175B | 96 | 12288 | 8192 tokens | 16 | 576 |
| LLaMa2-70B | 80 | 8192 | 32k | 4 | 85 |

The last column in Table 1 is a size of video memory needed at the prefill stage, and batch is a quantity of processing requests for parallel processing. It can be learned that for the same large model, when the input sequence length increases and the quantity of parallel processing requests increases, the demand for video memory increases significantly.

When the video memory M needed at the prefill stage is obtained through computation, M can be compared with remaining available video memory space X in GPU video memory. If $X \geq M$, video memory space with a size of M can be requested at a time, and inference computation at the prefill stage can be performed. If $X < M$, the procedure cannot continue until processing of sufficient requests is completed and sufficient video memory is released.

Usually, a GPU has a limited video memory capacity, and typical video memory space is 16 GB to 80 GB. If video memory space needed for all computation layers is requested at a time, it is highly possible that the available video memory space X is less than M, triggering waiting or direct reporting of an error, and the waiting takes several seconds to tens of seconds until other processing requests are all processed at a decode stage and sufficient video memory is released. This greatly affects online service experience.

Moreover, the preceding problems are likely to cause a vicious cycle, resulting in a poor throughput. Because many queued processing requests cannot enter the prefill stage and the subsequent decode stage, and the quantity of processing requests at the decode stage is reduced, computation parallelism is very low, and GPU resource utilization efficiency is poor. In addition, the two stages are executed serially, which leads to a long overall running time. The long time consumption affects timely release of video memory used by the KV cache, thus forming a vicious cycle, and resulting in waiting of many processing requests.

To reduce a first-word latency and increase a throughput, embodiments of this specification provide an inference computation method for a large model. To be specific, at a prefill stage, video memory space is requested for partial computation layers, inference result data stored in GPU video memory are dumped to CPU memory, and the requested video memory space is fully used in a way of hierarchical computing for all computation layers. Compared with requesting video memory space for all the computation layers at a time, requesting video memory space for the partial computation layers significantly reduces the video memory space to be requested, so that a GPU can provide parallel processing for more processing requests. It is worthwhile to note that the method provided in the embodiments of this specification is not limited to applications at the prefill stage of the large model. Because there are many types of large models, there is no distinction between a prefill stage and a decode stage in some large models.

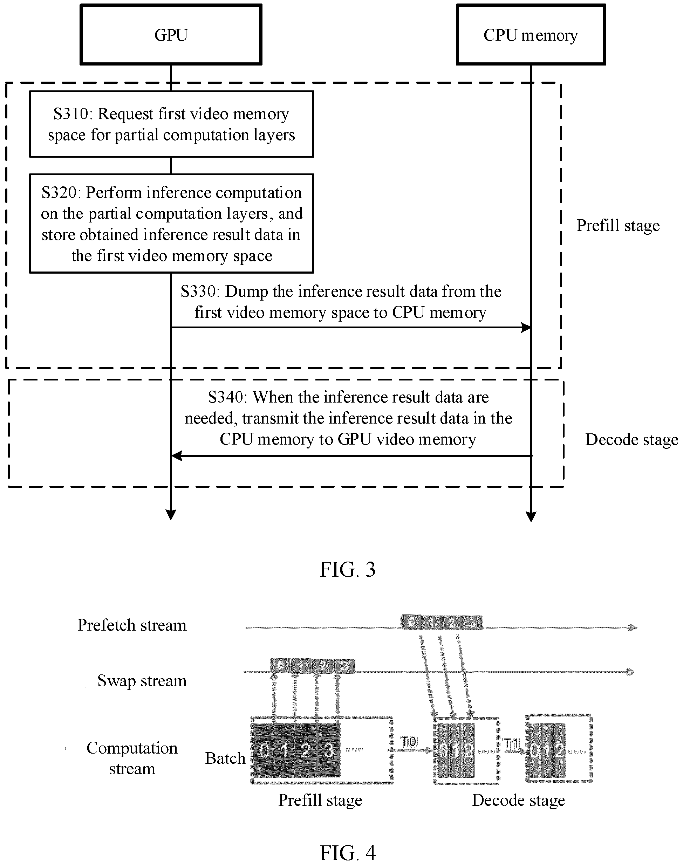

The embodiments of this specification are intended for a scenario in which the large model needs to request video memory space for all the computation layers in an inference process, and use the requested video memory space to store inference result data obtained by the computation layers through computation. In this scenario, in the embodiments of this specification, video memory is not requested for all the computation layers, but for the partial computation layers. Computation is performed on all the computation layers in batches, and the inference result data of the partial computation layers stored in the GPU video memory are dumped to the CPU memory to reduce usage of video memory space. The following describes the embodiments in detail with reference to FIG. 3.

FIG. 3 is a schematic flowchart illustrating an inference computation method for a large model, according to some embodiments. The large model includes N computation layers, where N is a non-zero integer, and is usually a large value. For example, N can be 80 or 96. The large model is executed by a GPU and a CPU in a computing device during inference and settlement. The method is executed by the GPU and the CPU. The method specifically includes the following steps.

Step S310: The GPU requests first video memory space G1 for partial computation layers of all the N computation layers. A quantity of the partial computation layers is L, where L is a non-zero integer and L is less than N.

Step S320: The GPU performs inference computation on the partial computation layers, and stores obtained inference result data D1 in the first video memory space G1.

Step S330: The GPU dumps the inference result data D1 from the first video memory space G1 to CPU memory, where the released video memory space is provided for other computation layers to perform inference computation.

Step S340: When the inference result data are needed, transmit the inference result data D1 in the CPU memory to GPU video memory.

When the large model performs inference computation, and there is a need to request video memory space for the inference computation process of the computation layers, the method in the embodiments can be applied. The following describes the steps in detail.

In step S310, the need to request video memory space for the inference computation process of the computation layers may occur at any stage of inference computation of the large model. The operation of requesting the first video memory space G1 by the GPU can be performed under control of the CPU. A video card includes video memory space, and the GPU is directly connected to and interacts with the video card. The GPU uses the video memory space in the video card to store data when performing a computing task.

The GPU can request the first video memory space G1 for the L computation layers of the N computation layers based on to-be-processed data P1. The to-be-processed data P1 can be carried in a processing request.

The GPU can obtain the to-be-processed data P1 from the CPU. The CPU parses the received processing request to obtain the to-be-processed data P1 and sends the data P1 to the GPU. The CPU can also directly forward the processing request to the GPU, and the GPU parses the processing request to obtain the to-be-processed data P1. The to-be-processed data P1 correspond to the processing request. The processing request can be any processing request. The processing request can be sent by a user to the computing device. Specifically, for example, the processing request can be sent by the user to the large model running in the computing device, and the processing request is used to request the large model to answer the to-be-processed data P1. The processing request carries the to-be-processed data P1, and the to-be-processed data P1 can exist in a form of a prompt template (Prompt).

In the embodiments, inference computation of all the N computation layers is performed in batches. Initially, the L computation layers are computation layers of the first batch. The quantity L of the partial computation layers can be a default value, that is, a predetermined fixed value, which is a value irrelevant to the to-be-processed data P1. When the large model includes 80 computation layers, that is, when N is 80, the quantity L of the partial computation layers can be, for example, 10 or 8, or 8 to 16. The quantity L of the partial computation layers can also be determined based on a length of the to-be-processed data P1 and status data of the video memory. When the to-be-processed data P1 is relatively long and available video memory space is relatively small, L can be a smaller value. When the to-be-processed data P1 is relatively short and remaining video memory space is relatively large, L can be a larger value. In an implementation, a correspondence between different lengths of to-be-processed data and different available video memory space and L can also be listed based on experience, and the target L can be found from the correspondence when needed.

In step S310, when the first video memory space G1 is requested for the L computation layers of the N computation layers based on the to-be-processed data P1, the following steps 1 and 2 can be performed.

Step 1: Determine a video memory capacity needed when performing computation on the L computation layers based on the to-be-processed data P1.

Step 2: When the video memory capacity is not greater than available video memory space, allocate the first video memory space G1 in the available video memory space for the needed video memory capacity; and when the video memory capacity is greater than the available video memory space, enter a waiting state.

In an application scenario, when the length of the to-be-processed data P1 and the quantity N of model layers are determined, a video memory capacity needed for each computation layer is the same. When step 1 is performed, the needed video memory capacity can be determined based on a product of the quantity L of the partial computation layers and the length of the to-be-processed data P1. Specifically, the needed video memory capacity can be obtained through computation based on the above-mentioned formula (1), that is, the needed video memory capacity is obtained based on a product of parameters such as the quantity L of layers, an input sequence length, and a dimension size of a hidden layer (Hidden size). The input sequence length can be a data amount of the to-be-processed data P1, or can be a length of a text sequence after the to-be-processed data P1 are converted into a text, and the quantity of model layers is the quantity L of the partial computation layers.

Certainly, in the embodiments, there is no limitation on consistency of video memory capacities needed for the computation layers, that is, video memory capacities needed for different computation layers may be different. When the video memory capacities needed for different computation layers are different, the video memory capacity needed for each of the L computation layers may be calculated separately, and then the video memory capacity needed for the L computation layers is obtained through summation.

When the needed video memory capacity is obtained through computation, the video memory capacity can be compared with the current available video memory space. When the video memory capacity exceeds the available video memory space, the waiting state can be entered to wait for completion of a decode stage and then requesting is performed again when video memory is released. The step of allocating the first video memory space G1 in the available video memory space for the needed video memory capacity can be performed in a conventional way. Details are omitted for simplicity.

In step S320, the GPU can perform inference computation on the L computation layers based on the to-be-processed data P1, and store the obtained inference result data D1 in the first video memory space G1.

For the first computation layer of the first batch, its input can be embedding vectors of a plurality of tokens corresponding to the to-be-processed data P1, and its output includes attention information (belonging to a KV cache) and intermediate values corresponding to the plurality of tokens. The intermediate values are small values input to the next computation layer. For other computation layers, their inputs include attention information and intermediate values output by previous computation layers, and their outputs include new attention information and intermediate values corresponding to the plurality of tokens. Attention information output by each computation layer needs to be cached for fast access and computation at the decode stage.

An inference computation process of any computation layer includes computation based on an attention mechanism (including a self-attention mechanism) and computation based on a feed-forward neural network (FFN). The above-mentioned intermediate value is a hidden state obtained after calculation based on the attention mechanism and the feed-forward neural network, that is, the intermediate value belongs to a hidden feature of a token included in the to-be-processed data P1, and is occasionally also referred to as an activation value, which is a small value. The FFN can be implemented, for example, by a multilayer perceptron (MLP). For any computation layer, its input, after being computed by the attention mechanism, can yield attention information, and the attention information, after being computed by the feed-forward neural network, can yield an intermediate value.

The above-mentioned inference result data D1 can include key-value pair data (KV cache) generated based on the attention mechanism and the to-be-processed data P1, and the key-value pair data include key-value pair data obtained through computation from each computation layer. The key-value pair data obtained from each computation layer include key-value pair data for each token. Certainly, the inference result data D1 may also include an intermediate value output by the last computation layer among the L computation layers, and the intermediate value is input into the first computation layer in the next batch of computation layers. Alternatively, the inference result data D1 may not include the intermediate value. Whether the intermediate value is included can be set based on needs.

In step S320, the GPU can perform, in a conventional way, inference computation on the L computation layers based on the to-be-processed data P1, and store the obtained inference result data D1 in the first video memory space G1. For example, the GPU inputs the to-be-processed data P1 into the first computation layer among the L computation layers, and performs inference computation on the L computation layers sequentially starting from the first computation layer, where the inference result data D1 obtained in the computation process can be successively stored in the first video memory space.

In step S330, the GPU dumps the inference result data D1 from the first video memory space G1 to the CPU memory, where the released video memory space is provided for the other computation layers to perform inference computation.

The inference computation process of the computation layer and the dumping process of the inference result data can be performed asynchronously, that is, the inference computation and the dumping of the inference result data can be performed in parallel. After the dumping, the inference result data D1 in the first video memory space G1 are deleted, and the video memory space is released. Alternatively, after the dumping, the inference result data D1 in the first video memory space G1 are in an invalid state, other data can overwrite the inference result data D1, and the video memory space is released.

The above-mentioned steps S310 to S330 are a processing procedure for a batch of computation layers. When the video memory space is requested, the video memory space is not requested for all the N computation layers, but only for the partial computation layers. Therefore, the requested video memory space clearly cannot meet inference computation needs of all the N computation layers at a time, and it is necessary to perform inference computation on the N computation layers in batches.

The released video memory space can be used to perform inference computation on the next batch of computation layers, or can be used for other inference computation performed by the GPU, that is, the released video memory space is integrated into the available video memory space of the GPU video memory.

Based on this, when inference computation is performed on the next batch of computation layers, a plurality of implementations may be included. A difference between different implementations lies in whether the first video memory space G1 is reused after being released.

In an implementation, after step S330, that is, after dumping the inference result data D1 of a batch of computation layers from the first video memory space G1 to the CPU memory, the method may further include the following step 3.

Step 3: Reuse the first video memory space G1, use the next batch of computation layers as partial computation layers in step S320, and return to step S320 to perform inference computation on the partial computation layers based on the to-be-processed data P1. Performing inference computation on the next batch of computation layers in the first video memory space G1 is an operation of reusing the first video memory space G1.

The next batch of computation layers can be L layers or not. A specific quantity of computation layers can be determined based on video memory space actually needed for computation. For example, when the large model includes 80 layers, inference computation can be performed in units of 10 computation layers. The first batch of computation layers includes layers 0 to 9, the second batch of computation layers includes layers 10 to 19, the third batch of computation layers includes layers 20 to 29, ..., the ninth batch of computation layers includes the 80th layer.

In the embodiments, steps S310 to S330 and step 3 constitute a loop process, and the inference computation of all the N computation layers can be completed through a plurality of loop processes. The first video memory space G1 is reused, and there is no need to request video memory each time before inference computation on is performed on a plurality of batches of computation layers. Therefore, the processing procedure is more convenient. The embodiments can also be applied to solutions in which all the N computation layers are basically evenly distributed among various batches.

In an implementation, after step S330, that is, after dumping the inference result data D1 of a batch of computation layers from the first video memory space to the CPU memory, the method may further include the following step 4.

Step 4: Request video memory space again for the next batch of computation layers, use the requested video memory space as first video memory space G1, use the next batch of computation layers as partial computation layers mentioned in step S320, and return to step S320 to perform inference computation on the partial computation layers based on the to-be-processed data P1.

For the step of requesting video memory space again, reference can be made to step S310, and a specific implementation is basically similar. Details are omitted here for simplicity. For a quantity of computation layers of the next batch, reference can be made to the description in step S3. Details are omitted here for simplicity.

In the embodiments, steps S310 to S330 and step 4 constitute a loop process, and the inference computation of all the N computation layers can be completed through a plurality of loop processes. In the embodiments, for each batch of computation layers, video memory space is requested again. This implementation can be applied to scenarios in which the quantity of layers in different batches of computation layers varies greatly.

The above-mentioned steps 3 and 4 can be implemented selectively based on needs; or for the same processing request, some batches of computation layers can reuse the first video memory space G1, while some batches of computation layers do not reuse the first video memory space G1 but request video memory space again.

Performing inference computation in batches also involves a problem of data connectivity between the current batch of computation layers and the next batch of computation layers, that is, a problem of data input and output between computation layers connecting the two batches of computation layers. For different implementations such as steps S3 and S4, the inference result data D1 may also correspondingly include different content. When the first video memory space G1 is reused, the intermediate value output by the last layer in the current batch of computation layers can be retained in the first video memory space G1, but is not included in the inference result data D1, that is, it does not need to be dumped to the CPU memory, to serve as input data for the next batch of computation layers.

When the first video memory space G1 is not reused, the intermediate value output by the last layer in the current batch of computation layers can be included in the inference result data D1 and dumped to the CPU memory together with the KV cache data. When inference computation is performed on the next batch of computation layers, the intermediate value is read from the CPU memory.

In step S340, when the inference result data D1 are needed, the inference result data D1 in the CPU memory are transmitted to the GPU video memory. For a currently popular large model based on an autoregressive transformer structure, when inference is performed, the inference usually includes a prefill stage and a decode stage. The above-mentioned step S310, that is, the step of requesting first video memory space G1 for partial computation layers of all the N computation layers, can be performed at the prefill stage. When the inference result data D1 are needed in step S340, the need for the inference result data D1 may arise at the decode stage.

In summary, if video memory needed for 80 layers, for example, is requested at a time, this part of video memory will not be used up immediately. In the embodiments, a batch request method is used. For example, video memory needed in each request for L layers can be configured based on total video memory, system pressure, and rules. In this case, the needed video memory is reduced to 1/10 to 1/20 of that of the original 80 layers. Therefore, a probability of successful requesting video memory is greatly increased, the demand for video memory in one request can be significantly reduced, and the waiting time of the processing request is reduced.

The KV cache obtained through computation by computation layer i is not used immediately, but needed at the decode stage after computation of the entire prefill stage is completed (for example, after computation of 80 layers is completed). This process may take several seconds. Therefore, the KV cache that is not accessed temporarily can be transmitted from the GPU video memory to the CPU memory, to free up more video memory space for computation of subsequent batches. Generally, the CPU memory is significantly larger than a total video memory capacity of a multi-card GPU. For example, the former is more than five times the latter. This method of transferring the KV cache and other data to the CPU memory may be referred to as asynchronous transfer (that is, asynchronous offloading).

The above-mentioned steps S310 to S340 describe the process of performing inference computation on processing requests in batches and dumping data to the CPU memory. In actual applications, when there are a plurality of processing requests, inference computation can be performed on some of the processing requests in the original way of requesting video memory for all the N computation layers at a time, and inference computation can be performed on some of the processing requests in a way of requesting video memory for some computation layers and performing inference computation in batches. In other words, the step of requesting first video memory space G1 for partial computation layers of the N computation layers in step S310 can be performed when the available video memory space is less than a predetermined threshold. When the available video memory space is less than the predetermined threshold, it means that the video memory is insufficient, and some processing requests may be waiting in a queue.

In an example, when a quantity of concurrent users increases from 16 to 20, the first-word latency of the large model (reflecting the time consumption of the prefill stage) surges from 428 ms to 3186 ms. A reason is that video memory of a system is insufficient, and approximately 10% of processing requests are waiting in a queue. In other words, computation can be performed on more than 90% of the current processing requests at the prefill stage normally in batches, and the processing requests take an average of 0.5 sec. 10% of the processing requests need to be queued to wait for completion of processing of previous processing requests, and the waiting time is 26 sec. Therefore, an average first-word latency is (0.5*9 + 26)/10 = 3.1 sec. By using the batch inference computation method in the embodiments, 10% of the processing requests queued in this example can all be eliminated, so that the average first-word latency is reduced from 3.1 sec to 0.5 sec, improved by approximately six times.

As described above, step S330 is to transmit the inference result data D1 from the GPU video memory to the CPU memory, and step S340 is to transmit the inference result data D1 from the CPU memory to the GPU video memory. Referring to FIG. 4, in other embodiments of this specification, to efficiently perform computation and transmission concurrently, a transmission module in the GPU can use separate streams for asynchronous background transmission.

FIG. 4 is a schematic diagram illustrating stream data transmission between the GPU and the CPU at different stages. The transmission includes a computation stream, a swap stream, and a prefetch stream. At the prefill stage, when inference computation is performed on a certain batch of computation layers, the background transmission can be started in an asynchronous event mode to transmit inference result data of a plurality of computation layers 0, 1, 2, 3, etc. of the batch from the GPU video memory to the CPU memory. The transmission is handled by a separate stream, such as the swap stream, which can be executed concurrently with the computation stream on the GPU. At the decode stage, transmission of the inference result data of the plurality of computation layers 0, 1, 2, 3, etc. from the CPU memory to the GPU video memory is handled by the prefetch stream.

At the decode stage, each token can be generated word by word, for example, including tokens such as T0 and T1. Generation of each token needs to undergo inference computation of all the N computation layers. When T0 is inferred, an input of any computation layer i includes: KV cache data of all tokens of computation layer i at the prefill stage, and an intermediate value output by previous computation layer i-1; and an output includes a KV value and an intermediate value. When T1 is inferred, an input of any computation layer i includes: KV cache data of all tokens of computation layer i at the prefill stage, a KV value generated by layer i at the decode stage when T0 is inferred, and an intermediate value output by previous computation layer i-1; and an output includes a KV value and an intermediate value.

It can be learned that when inference computation of any computation layer i is performed at the decode stage, the KV cache data of all the tokens corresponding to computation layer i at the prefill stage are needed. The data can be transmitted from the CPU memory to the GPU video memory.

To reduce a quantity of request transmissions, this specification further provides one or more other embodiments to improve a storage mode of the inference result data. As mentioned above, the inference result data include the key-value pair data generated based on the attention mechanism and the to-be-processed data P1, and each computation layer obtains the corresponding key-value pair data. In other words, after inference computation is performed on each computation layer, inference result data of the computation layer are obtained. Inference result data of a computation layer include inference result data corresponding to a plurality of tokens. Using inference result data including KV cache data as an example, a specific structure of inference result data of computation layer Li is provided in Table 2.

Table 2

| Inference result data of computation layer Li | | | | |
| --- | --- | --- | --- | --- |
| T0 | T1 | T2 | ... | Tm-1 |
| KV cache 1 | KV cache 2 | KV cache 3 | ... | KV cache m |

T0 to Tm-1 in the second row are m tokens, and the third row is m pieces of KV cache data corresponding to the m tokens. When inference result data of computation layer Li are mentioned, the inference result data include the m pieces of KV cache data corresponding to all the m tokens in Table 2.

In step S320, when the obtained inference result data D1 are stored in the first video memory space G1, continuous storage addresses are allocated for inference result data D1 of the same layer, that is, continuous storage addresses are allocated for inference result data of all tokens of the same layer, so that the inference result data of the same layer are continuously stored in the GPU video memory.

As such, after the inference result data are dumped from the first video memory space G1 to the CPU memory, the inference result data of the same layer in the CPU memory are also stored continuously.

When the inference result data in the CPU memory are transmitted to the GPU video memory in step S340, a transmission instruction may be submitted by the CPU to the GPU, and the inference result data in the CPU memory are transmitted to the GPU video memory based on the transmission instruction.

The transmission instruction is used to transmit the inference result data of the same computation layer, and the transmission instruction includes a start storage address and data length of the inference result data of the same computation layer. The start storage address can include a start storage address of the inference result data of the same computation layer in the CPU memory and a start storage address in the GPU video memory, that is, during the transmission from one address to another address, the start storage address includes start storage addresses at both ends. The start storage address in the GPU video memory may be sent to the CPU in advance. The CPU transmits data to the GPU via a PCI-E bus.

When several processing requests are processed in parallel, inference result data corresponding to the plurality of processing requests are obtained in step S320. The inference result data correspond to the processing requests, and there is inference result data corresponding to each processing request. Inference result data of a processing request include the inference result data corresponding to the plurality of computation layers, and inference result data of a computation layer include the inference result data corresponding to a plurality of tokens (referring to Table 2). The term "several" may be one or more.

When there are inference result data corresponding to the several processing requests, the continuous storage addresses are allocated for the inference result data of the same computation layer in relation to the several processing requests, so that the inference result data of the same computation layer in relation to the several processing requests are stored continuously. The transmission instruction is used to transmit the inference result data of the same computation layer in relation to the several processing requests, and the transmission instruction includes the start storage address and data length of the inference result data of the same computation layer in relation to the several processing requests.

The key to allocating continuous storage addresses is to store the inference result data of the same layer continuously. For example, current processing request 1, processing request 2, and processing request 3 are processed in parallel. When KV cache data of a plurality of processing requests are stored, continuous storage addresses can be allocated for KV cache data of computation layer i corresponding to processing request 1, KV cache data of computation layer i corresponding to processing request 2, and KV cache data of computation layer i corresponding to processing request 3, for storing the KV cache data continuously. Inference result data of any processing request at computation layer i include key-value pair data of a plurality of tokens. During continuous storage, key-value pair data of all tokens of processing request 1 at computation layer i can be stored continuously, then key-value pair data of all tokens of processing request 2 at computation layer i are stored continuously, and then key-value pair data of all tokens of processing request 3 at computation layer i are stored continuously. The continuous storage mode is not limited to the above-mentioned mode. For example, the key-value pair data of different processing requests at computation layer i can also be cross-stored.

When the inference result data are transmitted from the CPU memory to the GPU video memory at the decode stage, the data are usually transmitted by layer. For example, when it is necessary to obtain inference result data of a plurality of parallel processing requests at computation layer i at the same time, the inference result data of the plurality of processing requests at computation layer i can be transmitted by using one transmission instruction.

The following describes comparison between storing key-value pair data by token and storing key-value pair data by layer. It is assumed that the to-be-processed data include a total of Tm tokens, and that the large model includes 80 computation layers, each of which generates key-value pair data corresponding to m tokens. When key-value pair data are stored by token, for any token, key-value pair data of all the 80 computation layers corresponding to the token are stored continuously. When key-value pair data are stored by layer, for any computation layer, key-value pair data of all tokens corresponding to the computation layer are stored continuously.

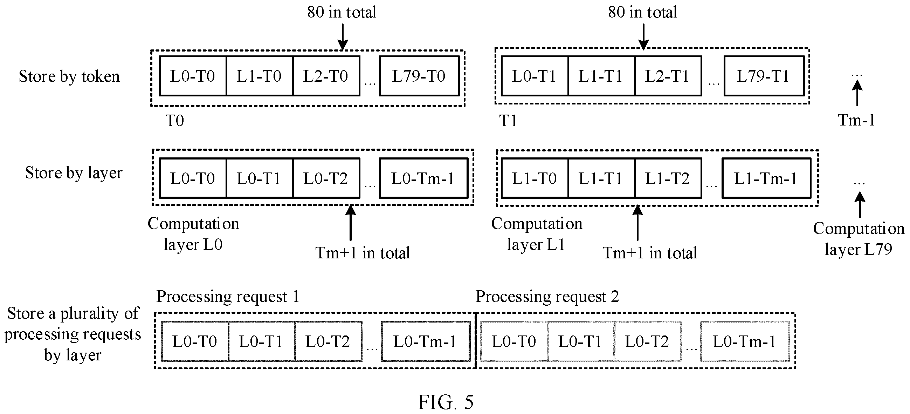

FIG. 5 is a schematic diagram of comparison between storing key-value pair data by token and storing key-value pair data by layer. A box marked with L0-T0 represents key-value pair data of the token T0 at layer L0, and a box marked with L1-T0 represents key-value pair data of the token T0 at layer L1. Meanings of other boxes are similar. When key-value pair data are stored by token, for the token T0, key-value pair data of T0 at 80 computation layers such as L0 and L1 are stored continuously; and for the token T1, key-value pair data of T1 at 80 computation layers such as L0 and L1 are stored continuously. When key-value pair data are stored by layer, for computation layer L0, key-value pair data of all m tokens included in computation layer L0 are stored continuously; and for computation layer L1, key-value pair data of all m tokens included in computation layer L1 are stored continuously. When a plurality of processing requests are processed in parallel, for computation layer L0, key-value pair data of all m tokens included in processing request 1 at computation layer L0 (red box) and key-value pair data of all m tokens included in processing request 1 at computation layer L0 (blue box) can be stored continuously to achieve layer-by-layer storage.

Storing key-value pair data by token is not conducive to loading key-value pair data of all processing requests at the same layer for batch computation during inference computation. When the KV cache of the same layer (including a KV cache of T0 at layer L0, a KV cache of T1 at layer L0, ...) is not continuous, S transmission instructions need to be initiated (S is equal to the sequence length of the request, for example, may be up to 32 KB), and performance is poor. Storing key-value pair data by layer is more conducive to batch inference computation for obtaining key-value pair data by layer. Compared with storing key-value pair data by token, which requires S transmissions for each batch of key-value pair data, storing key-value pair data by layer requires only one transmission for each batch of key-value pair data (only the start storage address and data length need to be specified). This continuous storage by layer accelerates the transmission and optimizes a video memory allocation order of key-value pair data, making the transmission and computation of the data more friendly.

In one or more other embodiments of this specification, for the prefill stage of LLM inference computation, the input sequence is relatively long, and performance of model inference is limited by computing resources of the entire inference system. The operation of transmitting the inference result data between the GPU video memory and the CPU memory (known as asynchronous offloading) can easily overlap the inference computation, the transmission does not affect computational performance, and the transmission time is approximately equal to the computation time. For the decode stage, an LLM inference engine generally incorporates KV cache optimization to accelerate inference. In this case, the sequence length input at the decode stage is 1, performance of model inference is limited by the size of the video memory, and computation overheads are relatively low. In this case, computation can hardly overlap the transmission of the KV cache. In other words, an inference computation speed is relatively high at the decode stage, while the transmission of the KV cache from the CPU memory to the GPU video memory is relatively slow, resulting in waiting for data. Therefore, in the embodiments, at the decode stage, a method of dynamically combining recomputing and asynchronous offloading is used, time consumption of transmitting the KV cache through asynchronous offloading is predicted by using a scheduler, and a proportion of a KV cache recomputing part and an asynchronous offloading transmission part is determined based on a real-time status of the system, so that performance of the inference system is optimized.

Specifically, when the inference result data in the CPU memory is transmitted to the GPU video memory in step S340, the following steps 5 to 7 can be performed. In this case, the CPU memory stores inference result data of a plurality of computation layers.

Step 5: When inference result data of a plurality of computation layers in the CPU memory are needed, divide the inference result data of the plurality of computation layers into to-be-transmitted inference result data of a first part of the computation layers and to-be-recomputed inference result data of a second part of the computation layers.

For example, the CPU memory stores inference result data (data 0) of computation layer L0, inference result data (data 1) of computation layer L1, inference result data (data 2) of computation layer L2, inference result data (data 3) of computation layer L3, and inference result data (data 4) of computation layer L4. The data can be divided into two parts. For example, the inference result data of the first part of the computation layers are data 0 of L0, data 1 of L1, and data 2 of L2, and the inference result data of the second part of the computation layers are data 3 of L3 and data 4 of L4. L0-L2 are the first part of the computation layers, and L3 and L4 are the second part of the computation layers.

When the data are divided into the inference result data of the first part of the computation layers and the inference result data of the second part of the computation layers, the division can be based on usage status information of a device system. The device system refers to a system that includes the CPU and the GPU in the computing device as an execution entity. The usage status information includes an amount of video memory used, a request queue status/length, a dequeue rate, etc.

Step 6: Transmit the inference result data of the first part of the computation layers from the CPU memory to the GPU video memory. For a specific transmission operation, reference can be made to the description related to step S340.

Step 7: Perform inference computation again on the second part of the computation layers in the GPU video memory to obtain inference result data of the second part of the computation layers. When inference computation is performed on the second part of the computation layers, the second part of the computation layers can be used as partial computation layers to perform inference computation based on the content related to steps S310 and S320.

In the embodiments, when it is necessary to transmit the inference result data from the CPU memory to the GPU video memory, inference result data of only one part of the computation layers can be transmitted to the GPU video memory, while inference computation is performed again on inference result data of another part of the computation layers in the GPU. This avoids transmission of needed inference result data of all the computation layers in the CPU memory to the GPU video memory, reduces the transmission time, and prevents the GPU from waiting for asynchronous data transmission when inference computation is performed at the decode stage. Therefore, performance of the inference system can be improved.

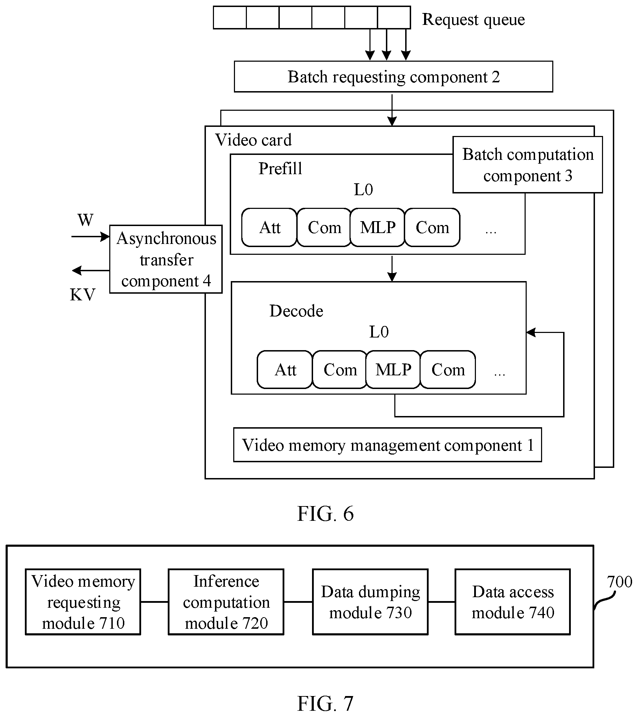

The following describes the embodiments from a perspective of video memory. FIG. 6 is a schematic diagram illustrating an internal logical structure of video memory. The internal logical structure includes a video memory management component 1, a batch requesting component 2, a batch computation component 3, and an asynchronous transfer component 4.

The video memory management component mainly provides an allocation and release interface of GPU video memory for storing a KV cache, and manages internal metadata (such as a status of a video memory block), and initialization, allocation, release, and status maintenance of CPU memory (used with the component 4). Functions of the video memory management component specifically include storage space initialization and block management.

Storage space initialization: Space is requested in batches from CPU or GPU hardware as a video memory/memory pool (for example, 20% of the CPU memory and 80% of the GPU video memory is requested as KV cache storage).

Block management is used inside the video memory/memory pool. For example, given a certain large model, a minimum block granularity can be configured. Assuming batch = 1 (1 processing request), and sequence length = 8 tokens, a KV cache size needed for computation at a computation layer is defined as a size of a basic block, for example, 64 KB. When block management is used, key-value pair data of the same layer in relation to several processing requests can be stored in blocks continuously by layer, as shown in FIG. 5.

The batch requesting component is responsible for checking a request queue of processing requests, fetching one processing request, computing a needed video memory capacity of a KV cache based on a length of input to-be-processed data and a quantity L of layers of a batch, where this video memory capacity is much smaller than a capacity needed in a one-time video memory request, then checking a free video memory capacity, and starting computation if a requirement is met, or if not, continuing to wait.

The batch computation component is responsible for scheduling computation of computation layers in batches. For example, the batch computation component schedules computation of eight consecutive layers each time, and attempts to request KV cache video memory when performing computation on the next batch of eight layers, and so on.

The asynchronous transfer component is responsible for transmitting temporarily unused KV cache data from the GPU video memory to the CPU memory. After the transmission is completed, the video memory is released to free up more space for subsequent computation at a prefill stage. The KV cache data do not need to be loaded from the CPU memory to the GPU video memory until a decode stage. At the decode stage, the asynchronous transfer component (including the scheduler mentioned above) is responsible for predicting the time needed to request asynchronous transmission of KV cache data, and determining a proportion of a KV cache recomputation part and an asynchronous transmission part based on a real-time status of a system, to optimize performance of an inference system. The asynchronous transfer component is also responsible for obtaining a model parameter W from the CPU memory.

In this specification, "first" in terms such as the first video memory space and corresponding "second" (if any) in this specification are used only for ease of distinction and description, and do not have any limiting meaning.

In this specification, the computing device can be implemented by any apparatus, device, platform, device cluster, etc. having computing and processing capabilities.

Some specific embodiments of this specification have been described above, and other embodiments fall within the scope of the appended claims. In some cases, actions or steps described in the claims can be performed in an order different from that in the embodiments and desired results can still be achieved. In addition, processes described in the accompanying drawings do not necessarily need a specific order or a sequential order shown to achieve the desired results. In some implementations, multitasking and parallel processing are also feasible or may be advantageous.

FIG. 7 is a schematic block diagram illustrating an apparatus for batch data processing in an inference process of a large model, according to some embodiments. The apparatus embodiments correspond to the method embodiments shown in FIG. 3. The large model includes N computation layers. The apparatus 700 is deployed in a GPU of a computing device and includes: a video memory requesting module 710, configured to request first video memory space for partial computation layers of the N computation layers; an inference computation module 720, configured to perform inference computation on the partial computation layers, and store obtained inference result data in the first video memory space; a data dumping module 730, configured to dump the inference result data from the first video memory space to CPU memory, where the released video memory space is provided for other computation layers to perform inference computation; and a data access module 740, configured to transmit the inference result data in the CPU memory to GPU video memory when the inference result data are needed.

In an implementation, an inference computation process of the large model includes a prefill stage and a decode stage. The video memory requesting module 710 runs at the prefill stage.

In an implementation, the video memory requesting module 710 is specifically configured to request the first video memory space for the partial computation layers of the N computation layers based on to-be-processed data. The inference computation module 720 is specifically configured to perform inference computation on the partial computation layers based on the to-be-processed data when performing inference computation on the partial computation layers.

In an implementation, the video memory requesting module 710 includes a determining submodule, an allocation submodule, and a waiting submodule (not shown in the figure). The determining submodule is configured to determine a video memory capacity needed when performing computation on the partial computation layers based on the to-be-processed data. The allocation submodule is configured to allocate the first video memory space in available video memory space for the needed video memory capacity when the video memory capacity is not greater than the available video memory space. The waiting submodule is configured to enter a waiting state when the video memory capacity is greater than the available video memory space.

In an implementation, a quantity of the partial computation layers is a default value; or a quantity of the partial computation layers is determined based on a length of the to-be-processed data and status data of the video memory.

In an implementation, the inference result data include key-value pair data generated based on an attention mechanism and the to-be-processed data, and the key-value pair data include key-value pair data obtained through computation from each computation layer.

In an implementation, the inference computation module 720 is specifically configured to allocate continuous storage addresses for inference result data of a same computation layer when storing the obtained inference result data in the first video memory space.

When transmitting the inference result data in the CPU memory to the GPU video memory, the data access module 740 is configured to transmit the inference result data in the CPU memory to the GPU video memory by using a transmission instruction submitted by a CPU to a GPU, where the transmission instruction is used to transmit the inference result data of the same computation layer, and the transmission instruction includes a start storage address and data length of the inference result data of the same computation layer.

In an implementation, the inference result data correspond to a processing request. When storing the obtained inference result data in the first video memory space, the inference computation module 720 is specifically configured to allocate the continuous storage addresses for the inference result data of the same computation layer in relation to several processing requests when there are inference result data corresponding to the several processing requests, where the transmission instruction is used to transmit the inference result data of the same computation layer in relation to the several processing requests, and the transmission instruction includes the start storage address and data length of the inference result data of the same computation layer in relation to the several processing requests.

In an implementation, the data access module 740 includes a division submodule, a transmission submodule, and a recomputation submodule (not shown in the figure). When inference result data of a plurality of computation layers in the CPU memory are needed, the division submodule is configured to divide the inference result data of the plurality of computation layers into to-be-transmitted inference result data of a first part of the computation layers and to-be-recomputed inference result data of a second part of the computation layers. The transmission submodule is configured to transmit the inference result data of the first part of the computation layers from the CPU memory to the GPU video memory. The recomputation submodule is configured to perform inference computation again on the second part of the computation layers in the GPU video memory to obtain inference result data of the second part of the computation layers.

In an implementation, the division submodule is specifically configured to divide the inference result data of the plurality of computation layers into the to-be-transmitted inference result data of the first part of the computation layers and the to-be-recomputed inference result data of the second part of the computation layers based on usage status information of a device system.

In an implementation, the video memory requesting module 710 is specifically configured to request the first video memory space for the partial computation layers of the N computation layers when available video memory space is less than a predetermined threshold.

The apparatus embodiment corresponds to the method embodiment. For detailed descriptions, reference can be made to the description of the method embodiment. Details are omitted here for simplicity. The apparatus embodiment is obtained based on the corresponding method embodiment and has the same technical effect as the corresponding method embodiment. For detailed descriptions, reference can be made to the corresponding method embodiment.

Some embodiments of this specification further provide a computer-readable storage medium. The computer-readable storage medium stores a computer program. When the computer program is executed on a computer, the computer is enabled to perform a method described in any one of FIG. 1 to FIG. 6.

Some embodiments of this specification further provide a computing device, including a memory and a processor. The memory stores executable code. When the processor executes the executable code, a method described in any one of FIG. 1 to FIG. 6 is implemented.

The embodiments of this specification are all described in a progressive way. Mutual reference can be made for the same or similar parts between the embodiments. Each embodiment focuses on differences from other embodiments. Particularly, the storage medium embodiment and the computing device embodiment are basically similar to the method embodiment, and therefore are described briefly. For related parts, reference can be made to some descriptions in the method embodiment.

A person skilled in the art should be aware that in the above-mentioned one or more examples, functions described in the embodiments of this application can be implemented by hardware, software, firmware, or any combination thereof. When the software is used to implement the functions, the functions may be stored in a computer-readable medium or transmitted as one or more instructions or code in the computer-readable medium.

It should be understood that the descriptions are merely specific implementations of the embodiments of this application, and are not intended to limit the protection scope of this application. Any modification, equivalent replacement, improvement, etc. made based on the technical solutions of this application shall fall within the protection scope of this application.

**Claims**

1. An inference computation method for a large model, wherein the large model comprises N computation layers, and the method comprises:

requesting first video memory space for partial computation layers of the N computation layers;

performing inference computation on the partial computation layers, and storing obtained inference result data in the first video memory space;

dumping the inference result data from the first video memory space to CPU memory, wherein the released video memory space is provided for other computation layers to perform inference computation; and

when the inference result data are needed, transmitting the inference result data in the CPU memory to GPU video memory.

2. The method according to claim 1, wherein an inference computation process of the large model comprises a prefill stage and a decode stage; and the step of requesting first video memory space for partial computation layers of the N computation layers is performed at the prefill stage.

3. The method according to claim 1, wherein the step of requesting first video memory space for partial computation layers of the N computation layers comprises:

requesting the first video memory space for the partial computation layers of the N computation layers based on to-be-processed data; and

the step of performing inference computation on the partial computation layers comprises:

performing inference computation on the partial computation layers based on the to-be-processed data.

4. The method according to claim 3, wherein the step of requesting the first video memory space for the partial computation layers of the N computation layers based on to-be-processed data comprises:

determining a video memory capacity needed when performing computation on the to-be-processed data in the partial computation layers;

when the video memory capacity is not greater than available video memory space, allocating the first video memory space in the available video memory space for the needed video memory capacity; and

when the video memory capacity is greater than the available video memory space, entering a waiting state.

5. The method according to claim 3, wherein a quantity of the partial computation layers is a default value; or a quantity of the partial computation layers is determined based on a length of the to-be-processed data and status data of video memory.

6. The method according to claim 3, wherein the inference result data comprise key-value pair data generated based on an attention mechanism and the to-be-processed data, and the key-value pair data comprise key-value pair data obtained through computation from each computation layer.

7. The method according to claim 1, wherein the step of storing obtained inference result data in the first video memory space comprises:

allocating continuous storage addresses for inference result data of a same computation layer; and

the step of transmitting the inference result data in the CPU memory to GPU video memory comprises:

transmitting the inference result data in the CPU memory to the GPU video memory by using a transmission instruction submitted by a CPU to a GPU, wherein the transmission instruction is used to transmit the inference result data of the same computation layer, and the transmission instruction comprises a start storage address and data length of the inference result data of the same computation layer.

8. The method according to claim 7, wherein the inference result data correspond to a processing request; and the step of allocating continuous storage addresses for inference result data of a same computation layer comprises: when there are inference result data corresponding to several processing requests, allocating the continuous storage addresses for the inference result data of the same computation layer in relation to the several processing requests, wherein the transmission instruction is used to transmit the inference result data of the same computation layer in relation to the several processing requests, and the transmission instruction comprises the start storage address and data length of the inference result data of the same computation layer in relation to the several processing requests.

9. The method according to claim 1, wherein the step of transmitting the inference result data in the CPU memory to GPU video memory comprises:

when inference result data of a plurality of computation layers in the CPU memory are needed, dividing the inference result data of the plurality of computation layers into to-be-transmitted inference result data of a first part of the computation layers and to-be-recomputed inference result data of a second part of the computation layers; transmitting the inference result data of the first part of the computation layers from the CPU memory to the GPU video memory; and

performing inference computation again on the second part of the computation layers in the GPU video memory to obtain inference result data of the second part of the computation layers.

10. The method according to claim 9, wherein the step of dividing the inference result data of the plurality of computation layers into to-be-transmitted inference result data of a first part of the computation layers and to-be-recomputed inference result data of a second part of the computation layers comprises:

dividing the inference result data of the plurality of computation layers into the to-be-transmitted inference result data of the first part of the computation layers and the to-be-recomputed inference result data of the second part of the computation layers based on usage status information of a device system.

11. The method according to claim 1, wherein the step of requesting first video memory space for partial computation layers of the N computation layers comprises:

when available video memory space is less than a predetermined threshold, requesting the first video memory space for the partial computation layers of the N computation layers.

12. An inference computation apparatus for a large model, wherein the large model comprises N computation layers, and the apparatus is deployed in a GPU and is configured to perform the method according to any one of claims 1 to 11.

13. A computer-readable storage medium comprising instructions stored therein that, when executed by a processor of a computing device, cause the computing device to perform the method according to any one of claims 1 to 11.

14. A computing device comprising a memory and a processor, wherein the memory stores executable instructions that, in response to execution by the processor, cause the computing device to perform the method according to any one of claims 1 to 11.

User request queue

Batch = 2

Prefill stage

Decode stage

FIG. 1

Model LLaMa2-70B/GB, Batch = 4

FIG. 2

```
┌─────────────────────┐                    ┌─────────────────────┐
│        GPU          │                    │     CPU memory      │
└─────────────────────┘                    └─────────────────────┘
```

┌ ─ ─ ─ ─ ─ ─ ─ ─ ─ ─ ─ ─ ─ ─ ─ ─ ─ ─ ─ ─ ─ ─ ─ ┐

┌───────────────────────────────────┐
│ S310: Request first video memory  │
│ space for partial computation     │
│ layers                            │
└───────────────────────────────────┘

┌───────────────────────────────────┐
│ S320: Perform inference computation│
│ on the partial computation layers, │          Prefill stage
│ and store obtained inference result│
│ data in the first video memory     │
│ space                             │
└───────────────────────────────────┘

S330: Dump the inference result data from the
first video memory space to CPU memory  ──────────►

└ ─ ─ ─ ─ ─ ─ ─ ─ ─ ─ ─ ─ ─ ─ ─ ─ ─ ─ ─ ─ ─ ─ ─ ┘

┌ ─ ─ ─ ─ ─ ─ ─ ─ ─ ─ ─ ─ ─ ─ ─ ─ ─ ─ ─ ─ ─ ─ ─ ┐

S340: When the inference result data are
needed, transmit the inference result data in the
◄──────────  CPU memory to GPU video memory             Decode stage

└ ─ ─ ─ ─ ─ ─ ─ ─ ─ ─ ─ ─ ─ ─ ─ ─ ─ ─ ─ ─ ─ ─ ─ ┘

## FIG. 3

Prefetch stream

Swap stream

Computation stream    Batch

Prefill stage      Decode stage

## FIG. 4

EP 4 726 605 A1

80 in total

80 in total

**Store by token**

| L0-T0 | L1-T0 | L2-T0 | ... | L79-T0 |

T0

| L0-T1 | L1-T1 | L2-T1 | ... | L79-T1 |

T1

...

Tm-1

**Store by layer**

| L0-T0 | L0-T1 | L0-T2 | ... | L0-Tm-1 |

Computation
layer L0

Tm+1 in total

| L1-T0 | L1-T1 | L1-T2 | ... | L1-Tm-1 |

Computation
layer L1

Tm+1 in total

...

Computation
layer L79

**Store a plurality of
processing requests
by layer**

Processing request 1

Processing request 2

| L0-T0 | L0-T1 | L0-T2 | ... | L0-Tm-1 |

| L0-T0 | L0-T1 | L0-T2 | ... | L0-Tm-1 |

FIG. 5

Request queue

Batch requesting component 2

Video card

Prefill

L0

| Att | Com | MLP | Com | ... |

Batch computation
component 3

W

Asynchronous
transfer
component 4

KV

Decode

L0

| Att | Com | MLP | Com | ... |

Video memory management component 1

FIG. 6

| Video memory requesting module 710 | Inference computation module 720 | Data dumping module 730 | Data access module 740 | 700 |

FIG. 7

# EP 4 726 605 A1

**EUROPEAN SEARCH REPORT**

Application Number

EP 24 21 5790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DI LIU ET AL: "RetrievalAttention: Accelerating Long-Context LLM Inference via Vector Retrieval", ARXIV.ORG, CORNELL UNIVERSITY LIBRARY, 201 OLIN LIBRARY CORNELL UNIVERSITY ITHACA, NY 14853, 16 September 2024 (2024-09-16), XP091884295, * page 1 - page 3 * * page 17 * ----- | 1-14 | INV. G06N3/045 G06N3/063 |

**TECHNICAL FIELDS SEARCHED (IPC)**

G06N

The present search report has been drawn up for all claims

| Place of search | Date of completion of the search | Examiner |
|---|---|---|
| The Hague | 28 April 2025 | Falco, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P4C01)